# FASCICULE DE BREVET EUROPEEN

(11) **EP 3 327 832 B1**
(45) Date de publication et mention de la délivrance du brevet: **20.02.2019**
(21) Numéro de dépôt: 17203590.9
(22) Date de dépôt: 24.11.2017
(51) Int. Cl.: H01M 4/04, H01M 4/136, H01M 4/1397, H01M 4/58, H01M 4/62, H01M 4/66, H01M 4/80, H01M 4/02

(54) **PROCEDE DE FABRICATION D'UNE ELECTRODE POSITIVE POUR ACCUMULATEUR ELECTROCHIMIQUE LITHIUM-SOUFRE**
VERFAHREN ZUR HERSTELLUNG EINER POSITIVEN ELEKTRODE FÜR EINE LITHIUM-SCHWEFEL-BATTERIE
METHOD OF MANUFACTURING A POSITIVE ELECTRODE FOR A LITHIUM-SULFUR BATTERY

(30) Priorité: 28.11.2016 FR 1661584
(43) Date de publication de la demande: 30.05.2018
(73) Titulaire: Commissariat à l'énergie atomique et aux énergies alternatives, 75015 Paris (FR)
(72) Inventeur: BOLLOLI, Marco, 38100 GRENOBLE (FR); BARCHASZ, Céline, 38600 FONTAINE (FR); CLAUDEL, Fabien, 38400 SAINT MARTIN D'HERES (FR)
(74) Mandataire: Brevalex

(56) Documents cités:
- US-A1- 2002 106 561
- US-A1- 2014 220 453
- US-A1- 2015 372 291

## Description

### DOMAINE TECHNIQUE

La présente invention a trait à un procédé de préparation d'une électrode positive pour accumulateur électrochimique lithium-soufre.

Le domaine général de l'invention peut ainsi être défini comme celui des dispositifs de stockage d'énergie, en particulier celui des accumulateurs électrochimiques au lithium et, encore plus particulièrement, des accumulateurs électrochimiques au lithium-soufre.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydo-réduction, moyennant quoi il y a production d'électrons à l'origine du courant électrique et productions d'ions qui vont circuler d'une électrode à l'autre par le biais d'un électrolyte.

Des accumulateurs souscrivant à ce principe actuellement les plus usités sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ; et
*les accumulateurs au lithium, tels que les accumulateurs lithium-ion, utilisant classiquement, en tout ou partie, des matériaux lithiés comme matériaux d'électrode.

Du fait que le lithium est un élément solide particulièrement léger et présente un potentiel électrochimique particulièrement faible, les accumulateurs au lithium ont détrôné largement les autres accumulateurs mentionnés ci-dessus du fait de l'amélioration continue des performances des accumulateurs Li-ion en termes de densité d'énergie. En effet, les accumulateurs lithium-ion permettent d'obtenir des densités d'énergie massique et volumique (pouvant atteindre aujourd'hui près de 300 Wh.kg⁻¹) nettement supérieures à celles des accumulateurs Ni-MH et Ni-Cd (pouvant aller de 50 et 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en oeuvre comme matériaux d'électrode le couple LiCoO₂/graphite contre une tension nominale de l'ordre de 1,5 V pour les autres accumulateurs susmentionnés). Ces systèmes présentent également une faible autodécharge et une durée de vie élevée (allant de 500 à 1000 cycles, par exemple).

De par leurs propriétés intrinsèques, les accumulateurs Li-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique. Toutefois, la technologie des accumulateurs lithium-ion voit aujourd'hui ses performances plafonner.

Actuellement, une nouvelle technologie d'accumulateur à base de lithium se profile comme une alternative prometteuse, cette technologie étant la technologie lithium/soufre, dans laquelle l'électrode positive comprend, comme matériau actif, du soufre élémentaire ou un dérivé du soufre, tel que du sulfure de lithium ou un polysulfure de lithium.

L'utilisation du soufre, comme matériau actif, d'une électrode positive est particulièrement attractive, car le soufre présente une capacité spécifique théorique très élevée pouvant être jusqu'à plus de 10 fois supérieure à celle obtenue pour des matériaux conventionnels d'électrode positive (de l'ordre de 1675 mAh/g au lieu de 140 mAh/g pour LiCoO₂). Qui plus est, le soufre est présent, de manière abondante, sur la planète et se caractérise de ce fait par des coûts faibles. Enfin, il est peu toxique. Toutes ces qualités contribuent à le rendre particulièrement attractif en vue d'une mise en place à grande échelle, notamment pour les véhicules électriques, ce d'autant plus que les accumulateurs lithium/soufre peuvent permettre d'atteindre des densités d'énergie massique pouvant aller de 300 à 600 Wh.g⁻¹.

D'un point de vue fonctionnel, la réaction à l'origine de la production de courant (c'est-à-dire lorsque l'accumulateur est en mode de décharge) met en jeu une réaction d'oxydation du lithium à l'électrode négative qui produit des électrons, qui vont alimenter le circuit extérieur auquel sont reliées les électrodes positive et négative, et une réaction de réduction du soufre à l'électrode positive.

Ainsi, de manière explicite, en processus de décharge, la réaction globale est la suivante :

S₈ + 16Li → 8Li₂S

qui est la somme de la réaction de réduction du soufre à l'électrode positive (Ss + 16e⁻ → 8S²⁻) et de la réaction d'oxydation du lithium à l'électrode négative (Li → Li⁺+e⁻).

Il est entendu que les réactions électrochimiques inverses se produisent lors du processus de charge.

Comme il ressort de l'équation ci-dessus, la réaction implique un échange de 16 électrons, ce qui justifie la capacité spécifique élevée du soufre (1675 mAh.g⁻¹).

D'un point de vue mécanistique, et sans être lié par la théorie, à l'état initial (c'est-à-dire lorsque l'accumulateur est à l'état de charge complet), la matière active, qui est du soufre élémentaire, est présente à l'état solide dans l'électrode positive. Au cours de la réduction du soufre, c'est-à-dire au cours de la décharge, les molécules cycliques de soufre sont réduites et forment des chaînes linéaires de polysulfures de lithium, de formule générale Li₂Sₙ, avec n pouvant aller de 2 à 8. Puisque la molécule de départ est S₈, les premiers composés formés sont les polysulfures de lithium à chaînes longues, tels que Li₂S₈ ou Li₂S₆. Ces polysulfures de lithium étant solubles dans les électrolytes organiques, la première étape de décharge consiste donc en la solubilisation de la matière active dans l'électrolyte, et la production de polysulfures de lithium à chaînes longues en solution. Puis, au fur et à mesure que la réduction du soufre se poursuit, la longueur de chaîne des polysulfures est graduellement réduite, et des composés tels que Li₂S₅, Li₂S₄ ou encore Li₂S₂ sont formés en solution. Enfin, le produit final de réduction est le sulfure de lithium (Li₂S), qui, lui, est insoluble dans les électrolytes organiques. Ainsi, la dernière étape du mécanisme de réduction du soufre consiste en la précipitation du matériau actif soufré.

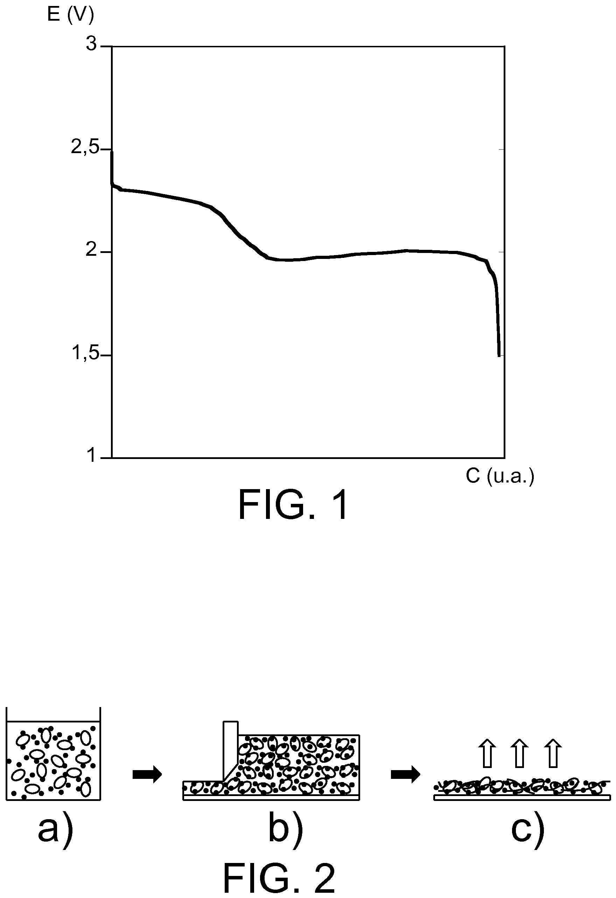

Ce mécanisme peut être corrélé au profil de décharge illustré sur la figure 1, qui représente un graphique illustrant l'évolution du potentiel E (en V) en fonction de la capacité C (en u.a).

En effet, dans ce profil, le premier plateau peut être attribué à la formation des chaînes longues de polysulfures de lithium, alors que le second plateau correspond à la réduction de la taille des chaînes soufrées, jusqu'à passivation de l'électrode positive.

Toutefois, les accumulateurs lithium-soufre présentent un certain nombre d'inconvénients.

La première limitation est d'ordre cinétique, puisque le soufre est un matériau isolant. Le soufre est également soluble dans les électrolytes organiques employés. Ainsi solubilisé, il peut contribuer à engendrer la corrosion de l'électrode négative de lithium et est responsable de l'autodécharge importante des accumulateurs lithium-soufre.

Les intermédiaires polysulfures sont également solubles dans l'électrolyte et susceptibles de réagir avec l'électrode négative. Ils favorisent donc aussi l'autodécharge de l'accumulateur. En outre, ils sont responsables de la mise en place d'un mécanisme navette qui se produit en charge, et qui entraîne la dégradation des performances de l'accumulateur, notamment en termes d'efficacité coulombique. Enfin, le produit de décharge Li₂S est, quant à lui, insoluble dans l'électrolyte et isolant électronique. Il précipite donc en fin de décharge et passive la surface des électrodes, qui deviennent alors inactives. De ce fait, les capacités pratiques obtenues peuvent être généralement très en-deçà de la capacité théorique, de l'ordre de 300 à 1000 mAh.g⁻¹ (la capacité théorique étant de l'ordre de 1675 mAh.g⁻¹).

Aussi, des améliorations sont à apporter concernant l'architecture des accumulateurs, par exemple, au niveau de l'électrode positive à base de soufre, de l'électrolyte, du séparateur et de l'électrode négative.

D'un point de vue structurel, un accumulateur lithium/soufre comprend, classiquement, au moins une cellule électrochimique comportant deux électrodes à base de matériaux différents (une électrode positive comprenant, comme matériau actif, du soufre élémentaire et une électrode négative comprenant, comme matériau actif, du lithium métallique), entre lesquelles est disposé un électrolyte liquide organique.

Concernant l'électrode positive comprenant du soufre, celle-ci est classiquement obtenue par un procédé d'enduction sur un substrat qui constitue le collecteur de courant, pour donner un ensemble formé de deux pièces constituées par le collecteur de courant et l'électrode positive en tant que telle. Plus spécifiquement, comme illustré sur la figure 2, il est réalisé, dans un premier temps, une encre comprenant un solvant, le matériau actif soufré, un matériau carboné (pour améliorer la conductivité électronique globale de l'électrode) et un liant (Partie a) de la figure 2). L'encre est déposée, dans un deuxième temps, sur un substrat destiné à constituer le collecteur de courant, qui est, généralement, une feuille métallique (comme un feuillard en aluminium) (Partie b) de la figure 2). Après évaporation du solvant et séchage, une électrode comprenant du soufre déposée sur une collecteur de courant est ainsi obtenue (Partie c) de la figure 2), l'ensemble résultant étant ensuite incorporé dans une cellule comprenant un séparateur imprégné d'électrolyte liquide organique, une électrode négative, l'électrode négative et l'électrode positive étant disposées, de part et d'autre du séparateur. Le pourcentage de soufre dans l'électrode est généralement important, généralement de 50 à 90% et, préférentiellement supérieure à 70% en masse, de sorte à obtenir des accumulateurs à forte densité d'énergie.

Le mécanisme de décharge d'un accumulateur lithium-soufre utilisant une telle électrode positive passe tout d'abord par une étape de dissolution du matériau actif, ce qui entraîne un effondrement de la structure initiale de l'électrode poreuse en raison du pourcentage important de soufre dans l'électrode. Après dissolution du soufre, la porosité de l'électrode est telle que la structure ne peut être maintenue et s'effondre. La surface disponible d'électrode est ainsi diminuée, et des grains de matériau, ou de composite carbone/liant, peuvent être désolidarisés du support constitué par le collecteur de courant. Cet endommagement, induisant ainsi une perte de surface active, s'avère crucial en fin de décharge, car les espèces formées (Li₂S₂, Li₂S, ...) sont à la fois très isolantes et insolubles dans l'électrolyte organique. Par conséquent, elles précipitent à l'électrode positive et sont responsables de sa passivation progressive. Or, l'épaisseur de matière déposée étant limitée à quelques nanomètres (Li₂S isolant et donc passivant), le dépôt d'une quantité importante de matériau actif dépend donc de la surface spécifique conductrice d'électrode disponible.

De plus, le composé final de décharge Li₂S est deux fois plus volumineux que le soufre, ce qui peut également contribuer à la pulvérisation de la structure d'électrode positive en fin de décharge. En conclusion, les cycles de dissolution/précipitation du matériau actif, inhérents au mécanisme de décharge, sont donc responsables de la faible capacité pratique restituée et de la faible tenue en cyclage des accumulateurs lithium-soufre.

Au vu de ce qui existe, les auteurs de la présente invention se sont donc proposé de mettre au point un nouveau procédé de préparation d'une électrode positive pour accumulateur lithium-soufre, dont la structure ne s'effondre pas au cours des cyclages et qui permette d'obtenir une amélioration significative de la capacité massique de l'électrode résultante.

### EXPOSÉ DE L'INVENTION

Ainsi, l'invention a trait à un procédé de préparation d'une électrode positive pour accumulateur lithium-soufre comprenant les étapes suivantes :
a) une étape d'imprégnation d'un non-tissé de fibres de carbone présentant une porosité d'au moins 90% et un grammage d'au moins 10 g/m² par une première composition comprenant au moins un additif carboné inorganique conducteur de l'électricité, **au moins** un liant polymérique et au moins un solvant ;
b) une étape **de** séchage du non-tissé ainsi imprégné ;
c) une étape de mise en contact du non-tissé avec une deuxième composition comprenant un matériau actif soufré.

Il a été constaté, de manière surprenante, qu'en mettant en oeuvre un tel procédé notamment en utilisant un non-tissé répondant aux spécificités susmentionnées en termes de porosité et de grammage, il est possible d'obtenir une amélioration significative concernant la capacité massique de l'électrode résultante et une amélioration significative de la densité d'énergie massique de l'accumulateur, dans lequel l'électrode positive est incorporée. Le fait que le support du matériau actif soufré soit constitué d'un non-tissé en fibres de carbone permet également d'éviter l'effondrement de la structure de l'électrode positive au fur et à mesure des cyclages.

Avant d'entrer plus en avant dans la description, on précise les définitions suivantes.

Par non-tissé de fibres de carbone, on entend un produit constitué d'un voile, d'une nappe ou d'un matelas de fibres de carbone qu'elles soient réparties directionnellement ou par hasard, et dont la cohésion interne est assurée par des méthodes mécaniques et/ou physiques, et/ou chimiques et/ou par combinaison de ces divers procédés, à l'exclusion du tissage et du tricotage. Dans notre cas, le non-tissé répond à deux caractéristiques essentielles, que sont la porosité (qui est d'au moins 90%) et le grammage (qui est d'au moins 10 g/m²).

On précise que la porosité correspond au volume de vide du non-tissé par rapport à son volume total. Pour procéder à sa mesure, le non-tissé, dont la quantité et les caractéristiques géométriques (longueur, largeur et épaisseur) sont connues, est placé dans un volume initial donné d'électrolyte. Puis il est procédé à la mesure de la différence entre le volume d'électrolyte après immersion du non-tissé et le volume initial d'électrolyte, cette différence correspond au volume de vide du non-tissé. La porosité en est déduite en faisant le rapport du volume de vide sur le volume total du non-tissé.

Concernant le grammage, il est déterminé par la mesure de la masse de non-tissé, la valeur de la masse étant ramenée à la surface en m² dudit non-tissé.

Plus spécifiquement, la porosité est, de préférence, supérieure ou égale à 92%. Par exemple, la porosité peut aller de 92 à 98%.

Plus spécifiquement, le grammage peut s'échelonner de 10 g/m² à 20 g/m².

En outre, le non-tissé de fibres de carbone peut présenter une surface spécifique allant de 0,01 et 5 m²/g.

On précise que la surface spécifique est mesurée par la méthode BET mise en oeuvre avec un appareil Micromeritics Tristar II-Surface Area and Porosity, cette méthode étant décrite dans Journal of the American Chemical Society, p. 309 (60), 1938.

Selon l'étape a), le non-tissé de fibres de carbone répondant aux spécificités susmentionnées est imprégné par une première composition comprenant au moins un additif carboné inorganique conducteur de l'électricité, au moins un liant polymérique et au moins un solvant.

Concernant l'additif carboné inorganique conducteur de l'électricité, il s'agit, avantageusement, d'une poudre de noir de carbone, ce type d'additif ayant pour particularité de présenter une importante surface spécifique, telle qu'une surface spécifique d'au moins 200 m²/g (mesurée par adsorption/désorption de gaz). Il peut s'agir notamment des poudres de noir de carbone vendues sous la dénomination Ketjenblack® (vendue par AzkoNobel), Vulcan® (vendue par Cabot) et des mélanges de ceux-ci.

Cet additif carboné inorganique conducteur de l'électricité peut être présent, dans la composition, à hauteur d'une teneur allant de 30 à 80% de la masse totale de la première composition (hors solvant).

Concernant le solvant, il peut s'agir d'eau, d'un solvant organique ou un mélange de solvants organiques ou encore d'un mélange comprenant un ou plusieurs solvants organiques et de l'eau.

En outre, la première composition peut comprendre d'autres additifs conducteurs de l'électricité que les poudres de noir de carbone, tels que des fibres de carbone, comme des fibres de carbone obtenues en phase vapeur.

Les fibres de carbone obtenues en phase vapeur peuvent être celles vendues sous la marque VGCF®.

Concernant le liant polymérique, il peut être choisi parmi :
- des liants polymériques appartenant à la catégorie des polymères cellulosiques, tels que de la carboxyméthylcellulose (connu sous l'abréviation CMC), de la méthylcellulose (connu sous l'abréviation MC) ;
- des liants polymériques appartenant à la catégorie des polymères éthyléniques fluorés, tel que du polytétrafluoroéthylène (connu sous l'abréviation PTFE) ;
- des liants polymériques appartenant à la catégorie des polymères vinyliques, tels qu'un poly(alcool vinylique) (connu sous l'abréviation PVA) ; et
- des mélanges de ceux-ci.

Les liants polymériques peuvent remplir plusieurs rôles :
- ils augmentent la cohésion entre les différents ingrédients de la première composition et notamment le ou les additifs carbonés ;
- dans la première composition, ils permettent de régler sa viscosité.

Le liant polymérique peut être présent, dans la première composition, à hauteur d'une teneur allant de 10 à 30% de la masse totale de la première composition (hors solvant).

La première composition peut comprendre, en outre, au moins un agent tensioactif (tel que ceux commercialisés sous les marques SDS®, Triton®).

Les agents tensioactifs permettent d'améliorer la dispersion du ou des additifs carbonés inorganiques conducteurs de l'électricité.

Le procédé de l'invention peut comprendre, avant la mise en oeuvre de l'étape a), une étape de préparation de la première composition, laquelle préparation comprend une opération de mise en contact des ingrédients de ladite première composition (additif(s) carboné(s) inorganique(s) conducteur(s) de l'électricité, liant(s) polymérique(s), solvant(s), éventuellement agent(s) tensioactif(s)) suivie d'une opération de dispersion de la composition à l'aide d'un mélangeur.

La première composition est ensuite utilisée, selon le procédé de l'invention, pour imprégner le non-tissé (étape b), cette étape d'imprégnation pouvant comprendre une ou plusieurs opérations d'enduction du non-tissé par la première composition.

Une fois ainsi imprégné, le non-tissé est soumis à une étape de séchage, cette étape de séchage pouvant être réalisée à une température allant de la température ambiante à 100°C, plus spécifiquement à 80°C (±20°C) pendant une durée pouvant aller de 1 heure à 24 heures en vue de l'élimination de tout ou partie du ou des solvants.

En outre, après l'étape b) et avant l'étape c), le procédé peut comprendre, avantageusement, une étape de frittage (dite étape b') du non-tissé séché, c'est-à-dire une étape de traitement thermique réalisée à une température et une durée efficaces pour obtenir une consolidation des ingrédients de la première composition au sein du non-tissé (hormis le ou les éventuels tensioactifs qui se dégradent et se volatilisent lors du frittage). Elle sert également à assurer une bonne répartition dans la porosité du ou des liants polymériques après fluage, ce qui pourrait permettre une meilleure homogénéisation de la structure finale. A titre d'exemple, l'étape de frittage peut être réalisée à une température supérieure d'au moins 20% à la température de fusion du ou des liants polymériques, par exemple, pendant une durée de 30 minutes sous air. A titre d'exemple, une température de 350°C pendant 30 minutes peut être utilisée pour le frittage d'une composition contenant un liant du type polytétrafluoroéthylène.

Après l'étape b) ou le cas échéant l'étape b'), le procédé comprend une étape de mise en contact du non-tissé ainsi séché et éventuellement fritté par une deuxième composition comprenant un matériau actif soufré. Cette étape peut intervenir directement après l'étape b) ou le cas échéant l'étape b') et avant mise en place de l'électrode dans un accumulateur lithium-soufre (dite première variante) ou peut être mise en oeuvre après incorporation de l'électrode dans un accumulateur lithium-soufre et mise en fonctionnement de celui-ci (dite deuxième variante), auquel cas la deuxième composition correspondra à l'électrolyte comprenant, en outre, le matériau actif soufré.

Selon la première variante, la deuxième composition comprend un matériau actif soufré et peut comprendre, en outre, un additif carboné inorganique conducteur de l'électricité et un liant polymérique.

Le matériau actif soufré peut être du soufre élémentaire (S₈) ou du disulfure de lithium (Li₂S), lequel matériau actif soufré peut être présent, dans la deuxième composition, à une teneur allant de 50 à 90% en masse par rapport à la masse totale de la composition, par exemple, une teneur de 80%.

L'additif carboné inorganique conducteur de l'électricité peut être une poudre de noir de carbone, qui peut être présente, dans la deuxième composition, à une teneur allant de 2 à 50% en masse par rapport à la masse totale de la composition, par exemple, une teneur de 10%.

Quant au liant, il peut être choisi parmi les liants polymériques suivants :
- des liants polymériques appartenant à la catégorie des polymères cellulosiques, tels que de la carboxyméthylcellulose (connu sous l'abréviation CMC), de la méthylcellulose (connu sous l'abréviation MC) ;
- des liants polymériques appartenant à la catégorie des polymères éthyléniques fluorés, tel que du polytétrafluoroéthylène (connu sous l'abréviation PTFE), le polyfluorure de vinylidène (connu sous l'abréviation PVDF) ;
- des liants polymériques appartenant à la catégorie des polymères vinyliques, tels qu'un poly(alcool vinylique) (connu sous l'abréviation PVA) ; et
- des mélanges de ceux-ci,
celui-ci pouvant être présent à une teneur allant de 2 à 20% en masse par rapport à la masse totale de la deuxième composition, par exemple, une teneur de 10%.

Que ce soit pour l'étape a) ou l'étape c), l'imprégnation ou mise en contact peut être envisagée par différentes techniques, telles que :
- le trempage-retrait (connu sous la terminologie anglaise « dip-coating ») ;
- l'enduction centrifuge (connue sous la terminologie anglaise « spin-coating ») ;
- l'enduction laminaire (connue sous la terminologie anglaise « laminar-flow-coating ou meniscus coating ») ;
- la pulvérisation ou l'épandage (connue sous la terminologie anglaise « spray-coating ») ;
- l'enduction au rouleau (connue sous la terminologie « roll to roll process ») ;
- l'enduction au pinceau (connue sous la terminologie anglaise « paint coating ») ;
- la sérigraphie (connue sous la terminologie anglaise « screen printing ») ; ou
- les techniques utilisant un couteau horizontal pour le dépôt (connue sous la terminologie anglaise « tape-coating »).

Une fois l'imprégnation effectuée, le non-tissé ainsi imprégné peut être soumis à une étape de séchage, en vue d'éliminer les espèces volatiles et fixer les ingrédients de la deuxième composition sur le non-tissé. Cette étape de séchage peut être réalisée à une température allant de la température ambiante à 100°C, par exemple une température de 80°C pendant 30 minutes.

Selon la deuxième variante, la deuxième composition correspond à un électrolyte utilisé dans l'accumulateur lithium-soufre, lequel électrolyte comprenant, entre autres, le matériau actif soufré, ce qui correspond à un accumulateur fonctionnant selon une configuration du type catholyte. Le matériau actif soufré est, avantageusement, un composé polysulfure de lithium de formule Li₂Sₙ avec n étant un entier allant de 2 à 8.

Ce composé constitue ainsi la source de soufre pour l'électrode positive.

Dans ce cas, la quantité de composé polysulfure de lithium introduite dans l'électrolyte est adaptée en fonction de la surface spécifique du non-tissé issu de l'étape b) ou b') du procédé de l'invention, celle-ci dictant la quantité de matériau actif qu'il est possible de déposer. Par exemple, le composé polysulfure de lithium peut être dissous dans l'électrolyte à une concentration allant de 0,25 mol.L⁻¹ à la concentration de saturation.

En outre, l'électrolyte faisant office de deuxième composition comprend classiquement au moins un solvant organique et au moins un sel de lithium.

Le ou les solvants organiques peuvent être, par exemple, un solvant comportant une ou plusieurs fonctions éther, nitrile, sulfone et/ou carbonate avec, par exemple, une chaîne carbonée pouvant comporter de 1 à 10 atomes de carbone.

A titre d'exemples de solvants comportant une fonction carbonate, on peut citer :
- des solvants carbonates cycliques, tel que le carbonate d'éthylène (symbolisé par l'abréviation EC), le carbone de propylène (symbolisé par l'abréviation PC).
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC).

A titre d'exemple de solvants comportant une fonction éther, on peut citer les solvants éthers, tels que le 1,3-dioxolane (symbolisé par l'abréviation DIOX), le tétrahydrofurane (symbolisé par l'abréviation THF), le 1,2-diméthoxyéthane (symbolisé par l'abréviation DME), ou un éther de formule générale CH₃O-[CH₂CH₂O]ₙ-OCH₃ (n étant un entier allant de 1 et 10), tel que le diméthyléther de tétraéthylèneglycol (symbolisé par l'abréviation TEGDME) et les mélanges de ceux-ci.

De préférence, le solvant organique est un solvant éther ou un mélange de solvants éthers.

Le sel de lithium peut être choisi dans le groupe constitué par LiPF₆, LiCIO₄, LiBF₄, LiAsF₆, Lil, LiNO₃ LiR_{f}SO₃ (avec R_{f} correspondant à un groupe perfluoroalkyle comprenant de 1 à 8 atomes de carbone), LiN(CF₃SO₂)₂ (appelé également bis[(trifluorométhyl)sulfonyl]imidure de lithium correspondant à l'abréviation LiTFSI), LiN(C₂F₅SO₂)₂ (appelé également bis[(perfluoroéthyl)sulfonyl]imidure de lithium correspondant à l'abréviation LiBETI), LiCH₃SO₃, LiB(C₂O₄)₂ (appelé également bis(oxalato)borate de lithium ou LiBOB) et les mélanges de ceux-ci, la préférence portant sur un mélange LiTFSI/LiNO₃.

Le sel de lithium peut être présent, dans l'électrolyte, selon une concentration allant de 0,25 M à 2 M, par exemple, 1M.

Les électrodes positives obtenues selon le procédé de l'invention sont des structures, de par les ingrédients qu'elles contiennent, aptes à remplir à la fois le rôle d'électrode positive et le rôle de collecteur de courant.

Elles constituent également des structures autosupportées, c'est-à-dire qu'elles ne nécessitent pas d'être apposées sur un support pour être utilisées dans un accumulateur lithium-soufre.

Elles ne forment qu'une seule et même pièce, c'est-à-dire qu'elles ne résultent pas de l'adjonction d'une électrode positive et d'un collecteur de courant.

Les électrodes positives selon le procédé de l'invention sont destinées à être assemblées dans un accumulateur lithium-soufre comprenant au moins une cellule comprenant :
- une électrode positive obtenue selon le procédé de l'invention telle que définie ci-dessus ;
- une électrode négative ; et
- un électrolyte conducteur d'ions lithium disposé entre ladite structure et ladite électrode négative.

Nous précisons les définitions suivantes.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

L'électrode négative peut être autosupportée (c'est-à-dire ne nécessitant pas d'être apposée à un support, tel qu'un support collecteur de courant) ou peut comprendre, de préférence, un substrat collecteur de courant sur lequel est placé au moins le matériau actif de l'électrode négative, ce matériau actif pouvant être avantageusement du lithium métallique.

Le substrat collecteur de courant peut être en un matériau métallique (composé d'un seul élément métallique ou d'un alliage d'un élément métallique avec un autre élément), se présentant, par exemple, sous forme d'une plaque ou feuillard, un exemple spécifique d'un substrat collecteur en courant pouvant être une plaque en inox ou en cuivre. Le substrat collecteur de courant peut être également en un matériau carboné.

L'électrolyte est un électrolyte conducteur d'ions lithium, cet électrolyte pouvant être, en particulier, un électrolyte liquide comprenant au moins un solvant organique et au moins un sel de lithium, tels que définis ci-dessus.

En outre, lorsque l'accumulateur fonctionne selon une configuration de catholyte, l'électrolyte peut comprendre au moins un composé polysulfure de lithium de formule Li₂Sₙ avec n étant un entier allant de 2 à 8, tel que défini ci-dessus.

Dans les accumulateurs lithium-soufre, l'électrolyte liquide susmentionné peut être amené, dans les cellules électrochimiques des accumulateurs lithium-soufre, à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

L'électrolyte peut être également un électrolyte gélifié, ce qui correspond, dans ce cas, à un électrolyte comprenant un solvant organique et un sel de lithium, similaires à ceux décrits ci-dessus, qui imprègne une matrice poreuse qui gonfle en absorbant l'électrolyte, une telle matrice pouvant être un polyoxyde d'éthylène (connu sous l'abréviation POE), un polyacrylonitrile (connu sous l'abréviation PAN), un polyméthacrylate de méthyle (connu sous l'abréviation PMMA), un polyfluorure de vinylidène (connu sous l'abréviation PVDF) et leurs dérivés.

L'invention va, à présent, être décrite en référence aux modes de réalisation particuliers définis ci-dessous en référence aux figures annexées.

### BRÈVE DESCRIPTION DES FIGURES

La figure 1 est un graphique illustrant l'évolution du potentiel E (en V) en fonction de la capacité C (en u.a).
La figure 2 est un schéma de procédé illustrant la préparation d'une électrode positive conformément à l'état de l'art.

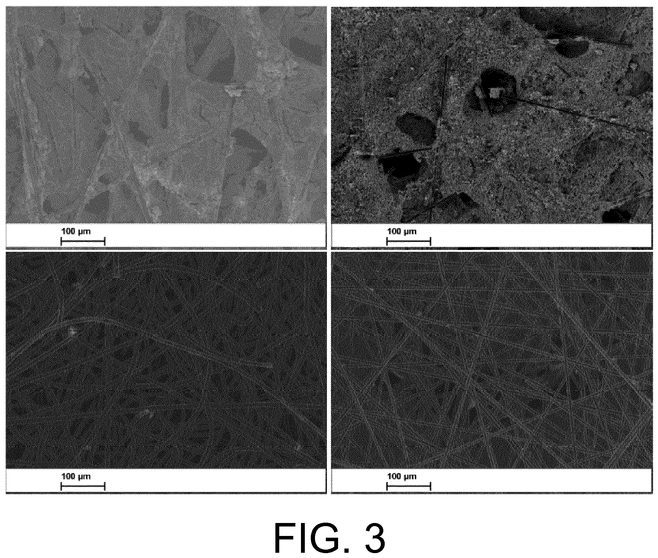

La figure 3 illustre des photographies prises au microscope à balayage électronique (500 fois) de structures utilisées aux exemples 1, 2, comparatif 1, comparatif 4 (respectivement de gauche à droite et de haut en bas).

### EXPOSÉ DÉTAILLÉ DE MODES DE RÉALISATION PARTICULIERS

### Exemple 1

Le présent exemple illustre la préparation d'une électrode positive obtenue selon le procédé conforme à l'invention.

Pour ce faire, un non-tissé de fibres de carbone présentant une porosité de 92% et un grammage de 20 g/m² est imprégné avec une première composition comprenant les ingrédients suivants :
- 0,25 g d'une poudre de noir de carbone Ketjenblack® (soit 38,37% en masse sèche après frittage) ;
- 0,25 g de fibre de carbones obtenues en phase vapeur VGCF® (soit 38,37% en masse sèche après frittage) ;
- 0,28 g d'un tensioactif Triton X-100 (0% en masse sèche après frittage) ; et
- 0,25 g de polytétrafluoroéthylène (PTFE) (23,25% en masse sèche après frittage).

L'extrait sec (à savoir le pourcentage massique de produit sec dans la composition) est de 1,61 %.

Le non-tissé ainsi imprégné est séché à 95°C pendant une heure sous air.

Le non-tissé ainsi imprégné est ensuite fritté à 350°C pendant 30 minutes.

Les proportions de carbone (Ketjenblack® et VGCF®) et de PTFE sur la masse totale du non-tissé après frittage sont de 48% et 14% respectivement.

Le non-tissé est ensuite enduit au moyen d'une racle avec une deuxième composition comprenant :
- 8 g de soufre élémentaire (79,92% en masse sèche) ;
- 1 g de Ketjenblack® (9,99 % en masse sèche) ; et
- 50 g de carboxyméthylcellulose (10,09% en masse sèche).

Après enduction, il est procédé à un séchage à 80°C à l'air libre pendant 30 minutes.

L'électrode positive résultante présente une quantité de soufre de 6,114 mg/cm².

### EXEMPLE 2

Le présent exemple illustre la préparation d'une électrode positive obtenue selon le procédé conforme à l'invention et plus spécifiquement selon des modalités similaires à celles de l'exemple 1 si ce n'est que :
- le non-tissé de fibres de carbone présente une porosité de 92% et un grammage de 17 g/m² ;
- les proportions de carbone (Ketjenblack® et VGCF®) et de PTFE sur la masse totale du non-tissé après frittage sont de 47% et 14% respectivement ;
- la quantité de soufre présente dans l'électrode est de 4,660 mg/cm².

### EXEMPLE 3

Le présent exemple illustre la préparation d'une électrode positive obtenue selon le procédé conforme à l'invention et plus spécifiquement selon des modalités similaires ceux de l'exemple 1 si ce n'est que :
- le non-tissé de fibres de carbone présente une porosité de 92% et un grammage de 10 g/m²;
- les proportions de carbone (Ketjenblack® et VGCF®) et de PTFE sur la masse totale du non-tissé après frittage sont de 44% et 13% respectivement ;
- la quantité de soufre présente dans l'électrode est de 5,055 mg/cm².

### EXEMPLE COMPARATIF 1

Le présent exemple illustre la préparation d'une électrode positive obtenue selon un procédé non conforme à l'invention.

Pour ce faire, un feutre non-tissé de carbone (référence H2315V1 de chez Freudenberg) a été enduit avec la deuxième composition comprenant du soufre de l'exemple 1.

Après enduction, il est procédé à un séchage à 80°C à l'air libre pendant 30 minutes.

L'électrode positive obtenue présente une quantité de soufre de 4,652 mg/cm².

### EXEMPLE COMPARATIF 2

Le présent exemple illustre la préparation d'une électrode positive obtenue selon un procédé non conforme à l'invention.

Pour ce faire, un non-tissé de fibres de carbone présentant une porosité de 92% et un grammage de 17 g/m² est imprégné avec une composition comprenant les ingrédients suivants :
- 0,60 g d'une poudre de noir de carbone Ketjenblack® (soit 14,98 % en masse sèche après frittage) ;
- 0,60 g de fibre de carbones obtenues en phase vapeur VGCF® (soit 14,98% en masse sèche après frittage) ;
- 2,40 g de soufre élémentaire (59,94% en masse sèche après frittage) ;
- 20 g de carboxyméthylcellulose (10,10 % en masse sèche après frittage).

La quantité de soufre présente dans l'électrode est de 4,970 mg/cm².

Après imprégnation, il est procédé à un séchage à 80°C à l'air libre pendant 30 minutes.

### EXEMPLE COMPARATIF 3

Une électrode de supercondensateur (feuillard d'Aluminium enduit de carbone à haute surface spécifique, chargement en carbone d'environ 55 g/m²) a été enduite de soufre avec la deuxième composition comprenant du soufre élémentaire décrite dans l'Exemple 1.

Après enduction, il est procédé à un séchage à 80°C à l'air libre pendant 30 minutes.

La quantité de soufre présente dans l'électrode est de 4,753 mg/cm².

### EXEMPLE COMPARATIF 4

Un non-tissé de fibres carbone présentant une porosité de 92% et un grammage de 17 g/m² a été enduit avec la deuxième composition comprenant du soufre élémentaire de l'exemple 1.

Après enduction, il est procédé à un séchage à 80°C à l'air libre pendant 30 minutes.

La quantité de soufre présente dans l'électrode est de 5,304 mg/cm².

### EXEMPLE 4

Un Microscope Électronique à Balayage (LEO 1530 FEG-SEM) a été utilisé pour obtenir des images respectivement :
- du non-tissé de l'exemple 1 après imprégnation de la première composition (photographie du haut à gauche) ;
- du non-tissé de l'exemple 2 après imprégnation de la première composition (photographie du haut à droite) ;
- du feutre non-tissé de l'exemple comparatif 1 avant imprégnation avec la composition définie à l'exemple comparatif 1 (photographie du bas à gauche) ;
- du non-tissé de l'exemple comparatif 4 avant imprégnation de la composition définie à l'exemple comparatif 4 (photographie du bas à droite).

La photographie de l'exemple comparatif 1 illustre une structure présentant des macropores dont le diamètre varie entre 40 et 150 microns. Les fibres, quant à elles, présentent une longueur de plusieurs millimètres et, de préférence, un diamètre entre 5 et 15 microns. La photographie de l'exemple comparatif 4 illustre une structure présentant une forte porosité telle que les non-tissés utilisés dans le cadre de l'invention, avant imprégnation avec des carbones à haute surface spécifique. La structure montre une macroporosité comparable à celle de l'Exemple comparatif 1, avec des fibres dont le diamètre se situe entre 6 et 8 micromètres.

Les photographies des structures des exemples 1 et 2 montrent l'effet du traitement à base de matériaux carbonés. La porosité de surface est visiblement réduite, et les macropores présentent des diamètres inférieurs à 50 micromètres. En plus, la présence de particules de carbone nanométrique engendre la création de méso- et micropores au sein de la structure fibreuse initiale.

### EXEMPLE 5

Dans cet exemple, ont été mesurées les masses volumiques, les surfaces actives ainsi que les porosités des structures des exemples 1, comparatif 1 et 4 définies dans l'exemple 4 ci-dessus (c'est-à-dire après imprégnation avec la première composition pour l'exemple 1 et avant imprégnation pour les exemples comparatifs 1 et 4).

La valeur de masse volumique a été obtenue comme le rapport entre la masse (d'un disque de 14 mm découpé dans les structures susmentionnées), et le volume, obtenu par mesure des dimensions à l'aide d'une jauge micrométrique. La mesure a été reproduite 10 fois et les résultats sont reportés dans le Tableau ci-dessous.

La valeur de surface active a été obtenue à travers une mesure d'adsorption-désorption de gaz à 77K, effectuée dans un appareil TriStar II (MICROMERITICS). Les données obtenues à pression partielle de gaz inférieures à 0.3 ont été traitées selon la méthode BET. Les valeurs de surface active obtenues sont aussi reportées dans le tableau ci-dessous.

Le tableau ci-dessous regroupe également les valeurs de porosité.

| Structure | Masse volumique (g.cm⁻³) | Surface active (m².g⁻¹) | Porosité (%) |
|---|---|---|---|
| EXEMPLE 1 | 0,25 ± 0,05 | 125 ± 10 | 82,2 |
| EXEMPLE COMPARATIF 1 | 0,46 ± 0,01 | < LDD* | 80 |
| EXEMPLE COMPARATIF 4 | 0,08 ± 0,01 | < LDD* | 92,0 |

| | | | |
|---|---|---|---|
| *LDD correspondant à la limite de détection | | | |

Les valeurs du tableau permettent de constater que, à travers l'utilisation d'un non-tissé de carbone de porosité initiale de 94%, il est possible d'obtenir, après un traitement d'imprégnation approprié, un produit structuré qui combine la porosité des meilleurs produits de l'état de l'art avec une surface active élevée.

### EXEMPLE 6

Dans cet exemple, les électrodes positives obtenues dans les exemples précédents ont été testées dans des piles, afin de déterminer les capacités massiques en décharge.

Les piles mises en oeuvre sont des piles boutons conçues de la manière suivante.

Des disques de 14 mm de diamètre ont été découpés dans les électrodes positives obtenues aux exemples précédents décrits ci-dessus, et séchés sous vide (20 torr) à 80°C pendant 48 heures. Ensuite, ils ont été intégrés, en tant qu'électrode positive, dans un accumulateur de type "pile bouton" (CR2032) ainsi construit :
- une électrode négative de lithium de 130 µm d'épaisseur, découpée au diamètre 16 mm et déposée sur un disque d'inox servant de collecteur de courant ;
- une électrode positive telle que décrite ci-dessus ;
- un séparateur Celgard® 2400 et un séparateur Viledon®, imbibés d'un électrolyte liquide à base du sel LiTFSI (1 mol.L⁻¹), LiNO₃ (0,1 mol.L⁻¹) et Li₂S₆ (0,25 mol.L⁻¹) en solution dans un mélange 50/50 en volume de TEGDME (tétraéthylène glycol diméthyléther) - DIOX (Dioxolane).

Les piles obtenues sont scellées sous atmosphère inerte et testées lors d'un cyclage galvanostatique à C/20. Les résultats sont reportés dans le tableau ci-dessous.

| Electrode positive | Capacité de décharge-1^{er} cycle (mAh/g) | Capacité de décharge-5^{ème} cycle (mAh/g) |
|---|---|---|
| Exemple 1 | 576,3 | 483,6 |
| Exemple 2 | 547,2 | 420,8 |
| Exemple 3 | 569,4 | 444,8 |
| Exemple comparatif 1 | 308,0 | 218,9 |
| Exemple comparatif 2 | 342,0 | 253,7 |
| Exemple comparatif 3 | 125,7 | 96,4 |
| Exemple comparatif 4 | 214,7 | 157,9 |

Il ressort que la capacité massique de décharge des électrodes positives préparées conformément au procédé de l'invention est presque doublée par rapport aux capacités massiques de décharge des exemples comparatifs.

## Revendications

1. Procédé de préparation d'une électrode positive pour accumulateur lithium-soufre comprenant les étapes suivantes :
a) une étape d'imprégnation d'un non-tissé de fibres de carbone présentant une porosité d'au moins 90% et un grammage d'au moins 10 g/m² par une première composition comprenant au moins un additif carboné inorganique conducteur de l'électricité, au moins un liant polymérique et au moins un solvant ;
b) une étape de séchage du non-tissé ainsi imprégné ;
c) une étape de mise en contact du non-tissé avec une deuxième composition comprenant un matériau actif soufré.

2. Procédé selon la revendication 1, dans lequel le grammage s'échelonne de 10 à 20 g/m².

3. Procédé selon la revendication 1 ou 2, dans lequel l'additif carboné inorganique conducteur de l'électricité est une poudre de noir de carbone.

4. Procédé selon la revendication 3, dans lequel la première composition comprend, en outre, des fibres de carbone.

5. Procédé selon l'une quelconque des revendications précédentes, dans lequel le liant polymérique est choisi parmi :
- des liants polymériques appartenant à la catégorie des polymères cellulosiques, tels que de la carboxyméthylcellulose, de la méthylcellulose ;
- des liants polymériques appartenant à la catégorie des polymères éthyléniques fluorés, tel que du polytétrafluoroéthylène ;
- des liants polymériques appartenant à la catégorie des polymères vinyliques, tels qu'un poly(alcool vinylique) ; et
- des mélanges de ceux-ci.

6. Procédé selon l'une quelconque des revendications précédentes, comprenant, en outre, après l'étape b) et avant l'étape c) une étape de frittage du non-tissé séché (dite étape b').

7. Procédé selon l'une quelconque des revendications précédentes, dans lequel l'étape c) intervient directement après l'étape b) ou le cas échéant, l'étape b') et avant mise en place de l'électrode dans un accumulateur lithium-soufre (dite première variante) ou est mise en oeuvre après incorporation de l'électrode dans un accumulateur lithium-soufre et mise en fonctionnement de celui-ci (dite deuxième variante).

8. Procédé selon la revendication 7, dans lequel, selon la première variante, la deuxième composition comprend, en outre, un additif carboné inorganique conducteur de l'électricité et un liant polymérique.

9. Procédé selon la revendication 8, dans lequel le matériau actif soufré est du soufre élémentaire (Ss) ou du disulfure de lithium (Li₂S).

10. Procédé selon la revendication 7, dans lequel, selon la deuxième variante, la deuxième composition correspond à un électrolyte utilisé dans un accumulateur lithium-soufre.

11. Procédé selon la revendication 10, dans lequel le matériau actif soufré est un composé polysulfure de lithium de formule Li₂Sₙ avec n étant un entier allant de 2 à 8.

12. Procédé selon la revendication 10 ou 11, dans lequel la deuxième composition comprend, en outre, au moins un solvant organique et au moins un sel de lithium.

## Patentansprüche

1. Verfahren zur Herstellung einer positiven Elektrode für eine Lithium-Schwefel-Batterie, umfassend die folgenden Schritte:
a) einen Schritt des Imprägnierens eines Vliesstoffs aus Kohlenstofffasern, die eine Porosität von wenigstens 90% und ein Flächengewicht von wenigstens 10 g/m² aufweisen, mit einer ersten Zusammensetzung, umfassend wenigstens ein elektrisch leitendes anorganisches Kohlenstoffadditiv, wenigstens einen polymerischen Binder und wenigstens ein Lösungsmittel;
b) einen Schritt des Trocknens des derart imprägnierten Vliesstoffs;
c) einen Schritt des Inkontaktbringens des Vliesstoffs mit einer zweiten Zusammensetzung, die ein aktives Schwefelmaterial umfasst.

2. Verfahren nach Anspruch 1, bei dem sich das Flächengewicht von 10 bis 20 g/m² erstreckt.

3. Verfahren nach Anspruch 1 oder 2, bei dem das elektrisch leitende anorganische Kohlenstoffadditiv ein Pulver von Kohlenstoffschwarz ist.

4. Verfahren nach Anspruch 3, bei dem die erste Zusammensetzung ferner Kohlenstofffasern umfasst.

5. Verfahren nach einem der vorhergehenden Ansprüche, bei dem der polymerische Binder aus Folgenden ausgewählt ist:
- polymerische Binder, die zur Kategorie der Zellulosepolymere gehören, wie zum Beispiel Carboxymethylzellulose, Methylzellulose;
- polymerische Binder, die zur Kategorie der fluorierten Ethylenpolymere gehören, wie zum Beispiel Polytetrafluorethylen;
- polymerische Binder, die zur Kategorie der vinylischen Polymere gehören, wie zum Beispiel ein Poly(vinylalkohol); und
- Mischungen derselben.

6. Verfahren nach einem der vorhergehenden Ansprüche, ferner umfassend nach dem Schritt b) und vor dem Schritt c) einen Schritt des Sinterns des getrockneten Vliesstoffs (genannt Schritt b').

7. Verfahren nach einem der vorhergehenden Ansprüche, bei dem der Schritt c) direkt nach dem Schritt b) oder gegebenenfalls dem Schritt b') erfolgt und vor der Platzierung der Elektrode in einer Lithium-Schwefel-Batterie (genannt erste Variante), oder nach dem Einbau der Elektrode in eine Lithium-Schwefel-Batterie und Infunktionsetzen derselben durchgeführt wird (genannt zweite Variante).

8. Verfahren nach Anspruch 7, bei dem gemäß der ersten Variante die zweite Zusammensetzung ferner ein elektrisch leitendes anorganisches Kohlenstoffadditiv und einen polymerischen Binder umfasst.

9. Verfahren nach Anspruch 8, bei dem das aktive Schwefelmaterial elementarer Schwefel (Ss) oder Lithiumdisulfid (Li₂S) ist.

10. Verfahren nach Anspruch 7, bei dem gemäß der zweiten Variante die zweite Zusammensetzung einem Elektrolyt entspricht, der in einer Lithium-Schwefel-Batterie verwendet wird.

11. Verfahren nach Anspruch 10, bei dem das aktive Schwefelmaterial eine Lithium-Polysulfidverbindung der Formel Li₂Sₙ ist, wobei n eine ganze Zahl ist, die von 2 bis 8 geht.

12. Verfahren nach Anspruch 10 oder 11, bei dem die zweite Zusammensetzung ferner wenigstens ein organisches Lösungsmittel und wenigstens ein Lithiumsalz umfasst.

## Claims

1. Preparation method for a positive electrode for a lithium-sulphur battery, comprising the following steps:
a) a step for impregnation, of a non-woven material made of carbon fibres with a porosity of at least 90% and a mass per unit surface area of at least 10 g/m², with a first composition comprising at least one electrically-conductive inorganic carbon-containing additive, at least one polymer binder and at least one solvent;
b) a step for drying the non-woven material thus impregnated;
c) a step for bringing the non-woven material into contact with a second composition comprising a sulphur-containing active material.

2. Method according to claim 1, wherein the mass per unit surface area ranges from 10 to 20 g/m².

3. Method according to claim 1 or 2, wherein the electrically conductive carbon-containing inorganic additive is a carbon-black powder.

4. Method according to claim 3, wherein the first composition moreover comprises carbon fibres.

5. Method according to any whatsoever of the preceding claims, wherein the polymer binder is chosen from:
- polymer binders belonging to the cellulosic polymer category, such as carboxymethylcellulose, methylcellulose;
- polymer binders belonging to the fluorinated ethylene polymer category, such as polytetrafluoroethylene;
- polymer binders belonging to the vinyl polymer category, such as poly(vinyl alcohol); and
- mixtures of these.

6. Method according to any whatsoever of the preceding claims, moreover comprising after step b) and before step c) a step for sintering of the dried non-woven material (called step b').

7. Method according to any whatsoever of the preceding claims wherein the step c) occurs directly after step b), or where relevant step b'), and before the electrode is put in place in a lithium-sulphur battery (so called first alternative) or is carried out after incorporation of the electrode in a lithium-sulphur battery and operation of the latter (so-called second alternative).

8. Method according to claim 7 wherein, according to the first alternative, the second composition moreover comprises an electrically-conductive inorganic carbon-containing additive and at least one polymer binder.

9. Method according to claim 8 wherein the sulphur-containing active material is elemental sulphur (S₈) or lithium disulphide (Li₂S).

10. Method according to claim 7 wherein, according to the second alternative, the second composition corresponds to an electrolyte used in a lithium-sulphur battery.

11. Method according to claim 10 wherein the sulphur-containing active material is a lithium polysulphide compound of formula Li₂Sₙ where n is an integer from 2 to 8.

12. Method according to claim 10 or 11, wherein the second composition moreover comprises at least one organic solvent and at least one lithium salt.
